# EUROPÄISCHE PATENTSCHRIFT

(11) **EP 0 950 943 B1**
(45) Veröffentlichungstag und Bekanntmachung des Hinweises auf die Patenterteilung: **24.01.2007**
(21) Anmeldenummer: 98124182.1
(22) Anmeldetag: 21.12.1998
(51) Int. Cl.: G06F 1/30

(54) **Schaltungsanordnung für elektronisch gesteuerte Schaltgeräte und Verfahren zum Einlesen von Eingangssignalen**
Circuit arrangement for electronic control apparatus and method for reading input signals
Agencement de circuit pour dispositif de commande électronique et procédé de lecture de signaux d'entrée

(30) Priorität: 17.04.1998 DE 19817914
(43) Veröffentlichungstag der Anmeldung: 20.10.1999
(73) Patentinhaber: Moeller GmbH, 53115 Bonn (DE)
(72) Erfinder: Hubert, Rolf, 53229 Bonn (DE); Culca, Horea-Stefan, 53721 Siegburg (DE)

(56) Entgegenhaltungen:
- EP-A- 0 049 462
- US-A- 4 399 538
- US-A- 4 827 149
- PATENT ABSTRACTS OF JAPAN vol. 017, no. 326 (P-1560), 21. Juni 1993 (1993-06-21) & JP 05 035614 A (TOSHIBA CORP), 12. Februar 1993 (1993-02-12)

## Beschreibung

Die Erfindung betrifft eine Schaltungsanordnung für elektronisch gesteuerte Schaltgeräte nach dem Oberbegriff des Anspruchs 1 sowie ein Verfahren zum Einlesen von Eingangssignalen elektronischer Schaltgeräte nach dem Oberbegriff des Anspruchs 4.

Aus der Druckschrift "Markt & Technik - Design & Elektronik", Ausgabe 26 vom 22.12.1987, sind Spannungsüberwachungs-ICs für Mikroprozessorsysteme bekannt. Diese Mikroprozessoren dienen hier dem Absichern flüchtiger Daten bei Spannungsausfall, indem auf eine Erkennung vor Unterschreitung einer definierten Schwellenspannung abgestimmt wird, so daß ausreichend Zeit für eine Absicherung der Daten in einem nichtflüchtigen Speicher verbleibt.

Desweiteren ist es bekannt, bei herkömmlichen programmierbaren Steuerungen, insbesondere bei Kleinsteuerungen, die Steuerung in der Regel über ein externes separates Gleichspannungsnetzteil zu versorgen. Die vom externen Netzteil bereitgestellte Versorgungsspannung wird innerhalb der zu versorgenden Steuerung auf eine interne Schaltungsanordnung geschaltet, die einerseits einen Verpolungsschutz gewährleistet und andererseits bei kurzzeitigen Spannungsausfällen der externen Versorgungsspannung eine Pufferung der Versorgungsspannung für die interne Spannungsversorgung gewährleistet. Derartige Kleinsteuerungen werden in der Regel für kleinere Steuerungsaufgaben eingesetzt die möglichst kostengünstig realisiert werden müssen. Aus diesem Grund wird für die externe Spannungsversorgung und für die Ansteuerung der Signaleingänge der Steuerung meistens nur ein und dasselbe externe Netzteil verwendet. Die externe Spannungsversorgung wird intern in der zu versorgenden Steuerung auf eine Schaltungsanordnung eines internen Netzteils gegeben. Diese Schaltungsanordnung weist zumindest einen Pufferkondensator zur Pufferung der Versorgungsspannung auf, so daß kurzzeitige Spannungsausfälle des externen Netzteils (in einer Größenordnung von ca. 10 -15 ms) durch den Pufferkondensator überbrückt werden können und so die Steuerung unbeeinflußt weiterarbeitet. Erst bei längeren Spannungsausfällen bei denen auch die interne gepufferte Spannung zusammenbricht, wird die Recheneinheit der Steuerung über ein sogenanntes power-fail-Signal (PFi) in einen definierten Grundzustand geschaltet. Dies hat allerdings den Nachteil, daß die kurzzeitigen externen Spannungsausfälle, die ebenfalls an den Signaleingängen der Steuerung auftreten, zu Fehlinformationen im abzuarbeitenden Anwenderprogramm führen können.

Der Erfindung liegt die Aufgabe zugrunde, eine gattungsgemäße Schaltungsanordnung zu schaffen, die ein störungsfreies Einlesen der Signaleingänge eines eingangs beschriebenen, elektronisch gesteuerten Schaltgerätes gewährleistet. Ferner soll ein Verfahren zum störungsfreien Einlesen der Signaleingänge derartiger Schaltgeräte geschaffen werden.

Die Aufgabe wird durch die Merkmale der unabhängigen Ansprüche gelöst. Vorteilhafte Ausgestaltungen finden sich in den jeweiligen Unteransprüchen.

Eine derartige Schaltungsanordnung enthält eine Verpolungsschutzdiode und einen Pufferkondensator, wobei die interne Versorgungsspannung als gepufferte Spannung hinter dieser Schaltungsanordnung abgegriffen wird und erfindungsgemäß vor dieser Schaltungsanordnung die nicht gepufferte externe Versorgungsspannung abgegriffen wird. Dabei wird über Erfassungsmittel, insbesondere einen Komparator zum Vergleich der externen Spannung mit einem festen Schwellenwert, die externe Spannung auf kurzzeitige Ausfälle, die durch Erfassung der gepufferten internen Versorgungsspannung nicht erkannt werden, überwacht. Wird ein Ausfall der externen Versorgungsspannung erkannt wird über die Recheneinheit des Schaltgerätes ein Einlesen der Signaleingänge verhindert. Mit Vorteil werden so Fehlinformationen durch kurzzeitige Spannungsausfälle der externen Versorgungsspannung vermieden. Weitere Vorteile und Ausführungsformen der Erfindung sind in den Unteransprüchen und in der nachfolgenden Figurenbeschreibung enthalten. Es zeigen:
- Fig. 1: die erfindungsgemäße Schaltungsanordnung in schematischer Darstellung,
- Fig. 2: Zustandsdiagramme verschiedener Signalpunkte der Schaltungsanordnung, und
- Fig. 3: eine programmierbare Steuerung.

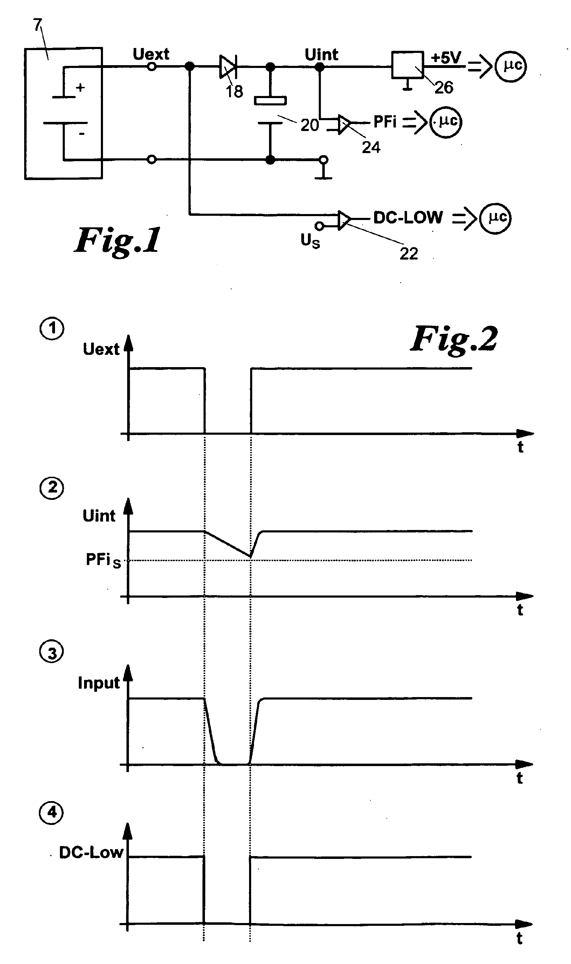

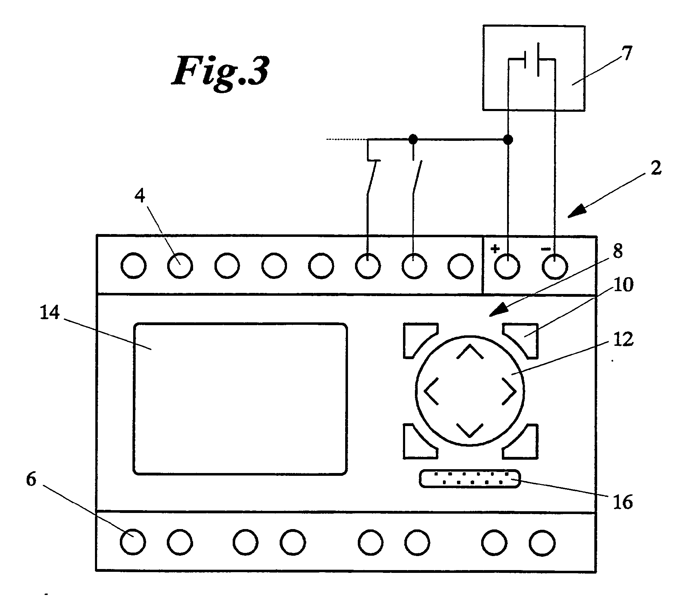

In Fig. 1 ist eine erfindungsgemäße Schaltungsanordnung dargestellt. Die Schaltungsanordnung ist geeignet für elektronisch gesteuerte Schaltgeräte 2, insbesondere für programmierbare Steuerungen (Fig. 3), die zumindest eine Recheneinheit (µC) und Signaleingänge 4 und Signalausgänge 6 aufweisen, wobei die Geräte 2 über ein externes Gleichspannungsnetzteil 7 spannungsversorgt werden und wobei diese externe Spannungsversorgung auch als Spannungsquelle für die Beschaltung der Signaleingänge 4 dient. Die programmierbare Steuerung schaltet unter Kontrolle eines Programmes (Anwenderprogramm) den Stromfluß zwischen den Signaleingängen 4 und den Signalausgängen 6. Das Programm ist mittels einer Bedieneinheit 8, die vorzugsweise aus vier Bedientasten 10 und einer Mehrfunktionstaste 12 besteht, in die Recheneinheit (µC) bzw. Rechen-Speichereinheit (z.B. Mikrocontroller) der Steuerung eingebbar. Die Eingabe und der Programmablauf sind auf einem Bildschirm 14 beobachtbar. Auf dem Bildschirm 14 ist während der Programmierung eine menuegeführte Benutzeroberfläche und während des Betriebs die Zustandsanzeige der Signaleingänge und -ausgänge 4, 6 der Steuerung und/oder die Zustandsanzeige von Signaleingängen und -ausgängen von Funktionsbausteinen und/oder Parametern von Funktionsbausteinen möglich. Über eine Schnittstelle 16 kann die Steuerung alternativ auch über einen externen Rechner programmiert und parametriert werden. Die wesentlichen Bestandteile der Schaltungsanordnung sind eine Verpolungsschutzdiode 18, ein Pufferkondensator 20 und erfindungsgemäß Mittel 22 zur Erfassung der nicht gepufferten Versorgungsspannung Uext. Dabei sind die Erfassungsmittel 22 vorzugsweise als Komparator zum Vergleich der externen Spannung Uext mit einem vordefinierten Schwellenwert U_{S} ausgebildet. Durch den Komparator 22 wird bei jedem Spannungsausfall ein Signal DC-LOW erzeugt, welches die Recheneinheit (µC) veranlasst, die Signaleingänge 4 des Schaltgerätes 2 zu diesem Zeitpunkt (für den kommenden Programmzyklus) nicht neu einzulesen. Die dargestellte Schaltungsanordnung weist ferner einen Komparator 24 zur Überwachung der gepufferten Versorgungsspannung Uᵢₙₜ auf. Dieser Komparator 24 erkennt länger dauernde Spannungsausfälle (die nicht mehr über den Kondensator 20 pufferbar sind) und veranlaßt die Recheneinheit (µC) das Schaltgerät 2 in einen definierten AUS-Zustand zu schalten. Ferner ist ein Festspannungsregler 26 vorhanden, der die interne Versorgungsspannung Uᵢₙₜ von 24 V DC auf einen Signalpegel von 5V DC für die Kommunikation mit der Recheneinheit (µC) regelt.

In der Fig. 2 sind Zustandsdiagramme von verschiedenen Signalpunkten der Schaltungsanordnung dargestellt. Diagramm 1 zeigt einen kurzzeitigen Spannungsausfall der externen Versorgungsspannung Uₑₓₜ. Die Dauer des Spannungsausfalls liegt in einem Bereich, der von den Puffermitteln 20 aufgefangen wird, so daß durch den Komparator 24 zur Überwachung der internen Versorgungsspannung Uᵢₙₜ kein Spannungsausfall erkannt wird (Diagramm 2) Die Spannung bleibt oberhalb der PFi-Schwelle PFi_{S}. Ohne die erfindungsgemäße Ausgestaltung der Schaltungsanordnung würden die mit der externen Versorgungsspannung Uₑₓₜ beschalteten Signaleingänge 4 jetzt ggf. einen Signalwechsel von High-Signal auf Low-Signal (Diagramm 3) erfahren und z.B. im Falle einer mit einer programmierbaren Steuerung realisierten Zählerschaltung falsche Zählergebnisse liefern. Durch die Erfindung wird nun ein zusätzliches Signal DC-LOW in Abhängigkeit vom Zustand der externen nicht gepufferten Versorgungsspannung erzeugt (Diagramm 4), an die Recheneinheit (µC) des Schaltgerätes weitergeleitet und durch die Recheneinheit (µC) veranlasst, die Signaleingänge 4 nicht zu lesen. Dies geschieht in der Regel durch einen Programmabschnitt - innerhalb des Betriebssystems oder in einer separaten Programmecke- der vor dem Einlesevorgang der Signaleingänge 4 abgearbeitet wird.

Eine weitere, bevorzugte Ausführungsform der Erfindung betrifft eine programmierbare Steuerung (Fig. 3) der oben beschriebenen Art mit einer derartigen Schaltungsanordnung. Die programmierbare Steuerung weist zumindest eine Recheneinheit (µC), einen Bildschirm 14 eine Bedieneinheit 8, sowie Signaleingänge 4 und Signalausgänge 6 auf, wobei die Recheneinheit (µC), der Bildschirm 14, die Bedieneinheit 8 und die Signaleingänge 4 und Signalausgänge 6 in einem gemeinsamen Gehäuse untergebracht sind und wobei Schaltfunktionen durch den Benutzer über eine menuegeführte Benutzeroberfläche auf dem Bildschirm 14 programmierbar sind. Dabei wird die Steuerung über ein externes Gleichspannungsnetzteil 7 versorgt, welches gleichzeitig die Versorgung für die Beschaltung der Signaleingänge 4 bildet. Die Schaltungsanordnung des internen Netzteils weist ebenfalls Puffermittel 20 zur Pufferung der externen Versorgungsspannung Uₑₓₜ auf. Ferner ist die Schaltungsanordnung des internen Netzteils der programmierbaren Steuerung ebenfalls mit zusätzlichen Mitteln 22 zur Erfassung der nicht gepufferten Versorgungsspannung versehen, so daß hierdurch, wie zuvor bereits beschrieben, bei jedem kurzzeitigen Spannungsausfall ein Einlesen der Signaleingänge 4 sicher vermieden wird.

Desweiteren betrifft die Erfindung ein Verfahren zum Einlesen von Eingangssignalen für eingangs genannte elektronisch gesteuerte Schaltgeräte, wobei zu Beginn eines jeden Programmzyklus die nicht gepufferte Versorgungsspannung Uₑₓₜ erfaßt wird, anschließend in Abhängigkeit vom Vorhandensein der Versorgungsspannung Uₑₓₜ ein insbesondere binäres Überwachungssignal DC-LOW erzeugt wird und abschließend in Abhängigkeit vom Zustand des Überwachungssignals DC-LOW die Signaleingänge 4 eingelesen oder nicht eingelesen werden. Vorzugsweise werden die Signaleingänge 4 bei kurzzeitig nicht vorhandener externer Versorgungsspannung Uₑₓₜ zu Beginn des nächsten Programmzyklus nicht eingelesen.

## Patentansprüche

1. Schaltungsanordnung für ein elektronisch gesteuertes, extern gleichspannungsversorgtes Schaltgerät (2), insbesondere für eine programmierbare Kleinsteuerung, welches ein Gleichspannungsnetzteil, eine Recheneinheit (µC), Signaleingänge (4) und Signalausgänge (6) aufweist, wobei die externe Spannungsversorgung des Schaltgerätes(2) auch als Spannungsquelle für die Beschaltung der Signaleingänge (4) dient und die Schaltungsanordnung Mittel (20) zur Pufferung der Versorgungsspannung (Uₑₓₜ) aufweist, **gekennzeichnet durch** Mittel (22) zur Erfassung der nicht gepufferten Versorgungsspannung (Uₑₓₜ) und zur Erzeugung eines zusätzlichen Signals (DC-Low) in Abhängigkeit vom Vorhandensein der erfaßten Versorgungsspannung (Uₑₓₜ), wobei das Signal veranlasst, dass bei nicht vorhandener Versorgungsspannung (Uₑₓₜ) das Einlesen der Signaleingänge (4) **durch** die Recheneinheit (µC) verhindert wird.

2. Schaltungsanordnung nach Anspruch 1, **dadurch gekennzeichnet, daß** die Mittel (22) als Komparator ausgebildet sind.

3. Schaltungsanordnung nach Anspruch 1 oder 2 **dadurch gekennzeichnet, daß** diese in einer programmierbaren Steuerung Verwendung findet und die Steuerung einen Bildschirm (14) und eine Bedieneinheit (8) aufweist, wobei die Recheneinheit (µC), der Bildschirm (14), die Bedieneinheit (8), die Signaleingänge (4) und die Signalausgänge (6) in einem gemeinsamen Gehäuse untergebracht sind und wobei Schaltfunktionen durch den Benutzer über eine menuegeführte Benutzeroberfläche auf dem Bildschirm (14) programmierbar sind.

4. Verfahren zum Einlesen von Eingangssignalen bei extern gleichspannungsversorgten, eine Recheneinheit (µC), Signaleingänge (4) und Signalausgänge (6) aufweisenden Schaltgeräten, insbesondere einer programmierbaren Kleinsteuerung, wobei die externe Spannungsversorgung des Schaltgerätes auch als Spannungsquelle für die Beschaltung der Signaleingänge (4) dient und das Schaltgerät Mittel (20) zur Pufferung der Versorgungsspannung (Uₑₓₜ) aufweist, **dadurch gekennzeichnet, daß** von einem Komparator (22) in Abhängigkeit vom Vorhandensein der nicht gepufferten Versorgungsspannung (Uₑₓₜ) ein binäres Überwachungssignal (DC-Low) erzeugt wird, und zumindest zu Beginn eines jeden Programmzyklus dieses Überwachungssignal (DC-Low) von der Recheneinheit (µC) abgefragt wird und bei nicht vorhandener Versorgungsspannung (Uₑₓₜ) das Einlesen der Signaleingänge (4) durch die Recheneinheit (µC) verhindert wird.

## Claims

1. Circuit assembly for an electronically controlled switching device (2) with an external direct voltage supply, in particular for a small programmable control system, which switching device comprises a direct voltage power unit, an arithmetic-logic unit (µC), signal inputs (4) and signal outputs (6), the external voltage supply of the switching device (2) also acting as a voltage source for connecting the signal inputs (4) and the Circuit assembly comprising means (20) for buffering the supply voltage (Uₑₓₜ), **characterised by** means (22) for detecting the non-buffered supply voltage (Uₑₓₜ) and for generating an additional signal (DC-Low) as a function of the detected supply voltage (Uₑₓₜ) being present, the signal preventing the reading in of the signal inputs (4) by the arithmetic-logic unit (µC) if the supply voltage (Uₑₓₜ) is absent.

2. Circuit assembly according to claim 1, **characterised in that** the means (22) are in the form of a comparator.

3. Circuit assembly according to either claim 1 or claim 2, **characterised in that** this Circuit assembly is used in a programmable control system comprising a display screen (14) and an operating unit (8), the arithmetic-logic unit (µC), the display screen (14), the operating unit (8), the signal inputs (4) and the signal outputs (6) being accommodated in a common housing, and switching functions being programmable by a user via a menu-driven user interface on the display screen (14).

4. Method for the reading in of input signals in switching devices with an external direct voltage supply, said devices comprising an arithmetic-logic unit (µC), signal inputs (4) and signal outputs (6), in particular in a small programmable control system, the external voltage supply of the switching device also acting as a voltage source for connecting the signal inputs (4) and the switching device comprising means (20) for buffering the supply voltage (Uₑₓₜ), **characterised in that** a binary monitoring signal (DC-Low) is generated by a comparator (22) as a function of the non-buffered supply voltage (Uₑₓₜ) being present and this monitoring signal (DC-Low) is queried by the arithmetic-logic unit (µC) at least at the beginning of each programme cycle and the reading in of the signal inputs (4) by the arithmetic-logic unit (µC) is prevented in the absence of the supply voltage (Uₑₓₜ).

## Revendications

1. Montage de circuits pour un dispositif de commutation alimenté en tension continue externe à commande électronique (2), en particulier pour une commande miniature programmable, comportant un bloc d'alimentation en tension continue, une unité de calcul (µC), des entrées de signaux (4) et des sorties de signaux (6), l'alimentation externe en tension du dispositif de commutation (2) servant aussi de source de tension pour la connexion des entrées de signaux (4), le montage de circuits comportant des moyens (20) destinés à tamponner la tension d'alimentation (Uₑₓₜ), **caractérisé par** des moyens (22) destinés à détecter la tension d'alimentation non tamponnée (Uₑₓₜ) et à émettre un signal additionnel (DC-Low) en fonction de la présence de la tension d'alimentation détectée (Uₑₓₜ), le signal empêchant, en cas d'absence de la tension d'alimentation (Uₑₓₜ), la lecture des entrées de signaux (4) par l'unité de calcul (µC).

2. Montage de circuits selon la revendication 1, **caractérisé en ce que** les moyens (22) sont formés en comparateur.

3. Montage de circuits selon les revendications 1 ou 2, **caractérisé en ce qu'**il est utilisé dans une commande programmable, la commande comportant un écran (14) et une unité de commande (8), l'unité de calcul (µC), l'écran (14), l'unité de commande (8), les entrées de signaux (4) et les sorties de signaux (6) étant logés dans un boîtier commun, les fonctions de commutation pouvant être programmées par l'utilisateur par l'intermédiaire d'une surface utilisateur pilotée par menu sur l'écran (14).

4. Procédé de lecture de signaux d'entrée dans des dispositifs de commutation à alimentation externe en tension continue, comportant une unité de calcul (µC), des entrées de signaux (4) et des sorties de signaux (6), en particulier une commande miniature programmable, l'alimentation externe en tension du dispositif de commutation servant également de source de tension pour la connexion des entrées de signaux (4), le dispositif de commutation comportant des moyens (20) pour tamponner la tension d'alimentation (Uₑₓₜ), **caractérisé en ce qu'**un comparateur (22) transmet, en fonction de la présence de la tension d'alimentation non tamponnée (Uₑₓₜ), un signal de surveillance binaire (DC-LOW), ce signal de surveillance (DC-LOW) étant interrogé au début de chaque cycle de programme par l'unité de calcul (µC), la lecture des entrées de signaux (4) étant empêchée par l'unité de calcul (µC) en cas d'absence de la tension d'alimentation (Uₑₓₜ).
